# EUROPEAN PATENT APPLICATION

(11) **EP 4 712 448 A1**
(43) Date of publication of application: **18.03.2026**
(21) Application number: 24819651.1
(22) Date of filing: 23.04.2024
(51) Int. Cl.: H04L 67/50, G06F 9/451, G06F 3/0482, H04L 67/02

(54) **METHOD AND APPARATUS FOR PROVIDING WEB SERVICE**

(30) Priority: 09.06.2023 KR 20230074023
(71) Applicant: Samsung Electronics Co., Ltd., Suwon-si, Gyeonggi-do 16677 (KR)
(72) Inventor: KIM, Hyunsu, Suwon-si, Gyeonggi-do 16677 (KR); LEE, Jonghyun, Suwon-si, Gyeonggi-do 16677 (KR); SHIN, Youngsang, Suwon-si, Gyeonggi-do 16677 (KR); LEE, Juneho, Suwon-si, Gyeonggi-do 16677 (KR)
(74) Representative: Walaski, Jan Filip
(86) International application number: PCT/KR2024/095762
(87) International publication number: WO 2024/253501

(57) **Abstract**

The present disclosure discloses a method for providing a web service. The method of the present disclosure may comprise the actions of: on the basis of an execution request for a first web application, generating a first tab group corresponding to the first web application in a web application browser and displaying a first service screen of the first web application corresponding to a first tab of the first tab group; on the basis of receiving a service request for the first web application through the first service screen, displaying a second service screen of the first web application corresponding to a second tab of the first tab group; while the first tab group is generated in the web application browser, on the basis that an execution request for a second web application is identified, generating a second tab group corresponding to the second web application in the web application browser and displaying a first service screen of the second web application corresponding to a second tab of the second tab group.

## Description

### [Technical Field]

The disclosure relates to methods and devices for providing a web service.

### [Background Art]

Recently, the use of web application services that provide services through web applications stored on a server without installing applications on user devices has been increasing.

A web application service may be provided through a dedicated app for a specific web application. When providing a web application service through a dedicated app, e.g., the web application provider may have a burden of creating the dedicated app, and a user may have a burden of installation.

Meanwhile, a web application service may also be provided through a browser. When providing a web application service through a browser, measures need to be taken for efficiently managing tabs associated with pages related to the web application within the browser.

### [Disclosure of Invention]

### [Solution to Problems]

According to an embodiment of the disclosure, an electronic device includes a memory storing at least one instruction, a communication unit, and at least one processor connected to the memory and the communication unit and executing the at least one instruction stored in the memory. The at least one processor may be configured to generate a first tab group corresponding to a first web application in a web application browser based on an execution request of the first web application, display a first service screen of the first web application corresponding to a first tab of the first tab group, display a second service screen of the first web application corresponding to a second tab of the first tab group based on receiving a service request of the first web application through the first service screen, generate a second tab group corresponding to a second web application in the web application browser based on identifying an execution request of the second web application in a state in which the first tab group is generated in the web application browser, and display a first service screen of the second web application corresponding to a second tab of the second tab group. The web application browser may be configured to display the first tab and the second tab of the first tab group and the first tab of the second tab group, and to display a service screen corresponding to a tab selected based on a user input.

According to an embodiment of the disclosure, a method performed by an electronic device includes an operation of generating a first tab group corresponding to a first web application in a web application browser based on an execution request of the first web application, and displaying a first service screen of the first web application corresponding to a first tab of the first tab group, an operation of displaying a second service screen of the first web application corresponding to a second tab of the first tab group based on receiving a service request of the first web application through the first service screen, and an operation of generating a second tab group corresponding to a second web application in the web application browser based on identifying an execution request of the second web application in a state in which the first tab group is generated in the web application browser, and displaying a first service screen of the second web application corresponding to a second tab of the second tab group. The web application browser may be configured to display the first tab and the second tab of the first tab group and the first tab of the second tab group, and to display a service screen corresponding to a tab selected based on a user input.

According to an embodiment of the disclosure, an electronic device includes a memory storing at least one instruction, a communication unit, and at least one processor connected to the memory and the communication unit and executing the at least one instruction stored in the memory. The at least one processor may be configured to execute a first web application through a web application browser based on a first user input, generate a first tab group corresponding to the first web application, wherein the first tab group includes a first tab corresponding to a first page associated with the first web application, execute a second web application through the web application browser based on a second user input, generate a second tab group corresponding to the second web application, wherein the second tab group includes a second tab corresponding to a second page associated with the second web application, identify a third user input for adding a third page associated with the first web application, and generate a third tab corresponding to the third page based on the third user input and include the third tab in the first tab group. The first page, the second page, and the third page may be associated with the web application browser.

According to an embodiment of the disclosure, a method performed by an electronic device may include an operation of executing a first web application through a web application browser based on a first user input, an operation of generating a first tab group corresponding to the first web application, wherein the first tab group includes a first tab corresponding to a first page associated with the first web application, an operation of executing a second web application through the web application browser based on a second user input, an operation of generating a second tab group corresponding to the second web application, wherein the second tab group includes a second tab corresponding to a second page associated with the second web application, an operation of identifying a third user input for adding a third page associated with the first web application, and an operation of generating a third tab corresponding to the third page based on the third user input and including the third tab in the first tab group, wherein the first page, the second page, and the third page may be associated with the web application browser.

### [Brief Description of Drawings]

FIG. 1 is a block diagram illustrating an electronic device in a network environment according to various embodiments of the disclosure.
FIG. 2 illustrates an example of a web service providing system according to an embodiment of the disclosure.
FIG. 3 illustrates an example of an electronic device according to an embodiment of the disclosure.
FIG. 4A illustrates an example of a web client application according to an embodiment of the disclosure.
FIG. 4B illustrates an example of a web client application according to an embodiment of the disclosure.
FIG. 5 illustrates an example of a browser for providing a web application according to an embodiment of the disclosure.
FIG. 6 illustrates an example of an application execution display area according to an embodiment of the disclosure.
FIG. 7 is a flowchart illustrating a web service providing method according to an embodiment of the disclosure.
FIG. 8A illustrates an example of a screen of an electronic device including an application execution display area according to an embodiment of the disclosure.
FIG. 8B illustrates an example of a screen of an electronic device including a browser displaying a first browser window according to an embodiment of the disclosure.
FIG. 8C illustrates an example of a screen of an electronic device including a browser displaying a second browser window according to an embodiment of the disclosure.
FIG. 8D illustrates an example of a screen of an electronic device including a browser displaying a third browser window according to an embodiment of the disclosure.
FIG. 9 illustrates an example of a tab group structure according to an embodiment of the disclosure.
FIG. 10 illustrates an example of a page structure associated with a tab group according to an embodiment of the disclosure.
FIG. 11 illustrates an example of an application execution display area according to an embodiment of the disclosure.
FIG. 12 illustrates an example of a method of displaying tabs within multiple tab groups according to an embodiment of the disclosure.
FIG. 13A illustrates an example of a method of displaying tabs within multiple tab groups according to an embodiment of the disclosure.
FIG. 13B illustrates an example of a method of displaying tabs within multiple tab groups according to an embodiment of the disclosure.
FIG. 14 is a flowchart illustrating an operation method of an electronic device according to an embodiment of the disclosure.
FIG. 15 is a flowchart illustrating an operation method of an electronic device according to an embodiment of the disclosure.

### [Mode for the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

It should be appreciated that the blocks in each flowchart and combinations of the flowcharts may be performed by computer program instructions.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more packet processing devices. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, an element or a 'unit' may be implemented to reproduce one or more central processing units (CPUs) in a device or a security multimedia card. According to embodiments, a "...unit" may include one or more packet processing devices.

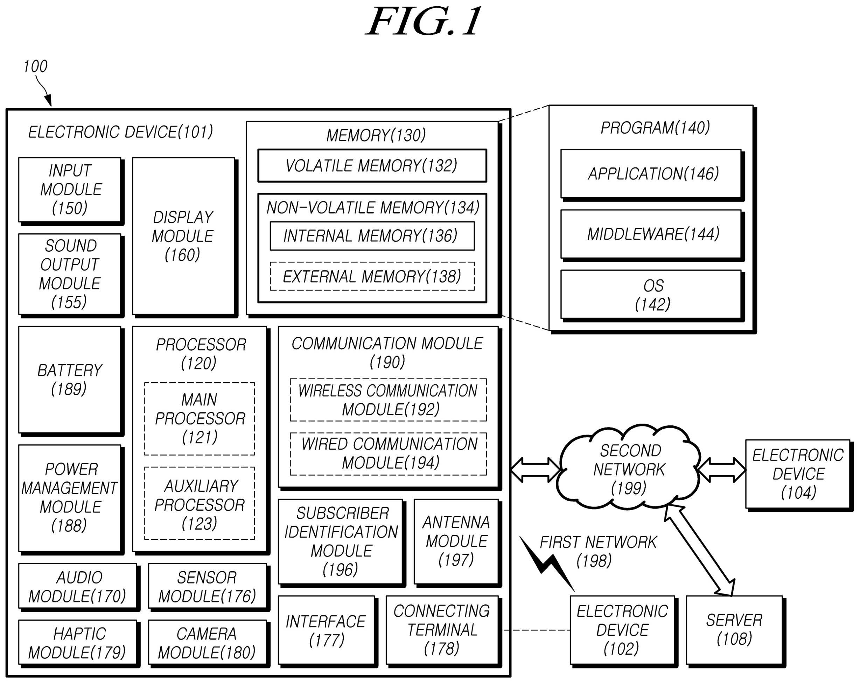

FIG. 1 is a block diagram illustrating an electronic device in a network environment according to various embodiments of the disclosure;

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a communication module 192 (e.g., a cellular communication module, a short-range communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The communication module 192 may identify or authenticate the electronic device 101 in a communication network, such as the first network 198 or the second network 199, using subscriber information (e.g., international mobile subscriber identity (IMSI)) stored in the subscriber identification module 196.

The communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The communication module 192 may support a high-frequency band (e.g., the mmWave band) to achieve, e.g., a high data transmission rate. The communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The communication module 192 may support various requirements specified in the electronic device 101, an external electronic device (e.g., the electronic device 104), or a network system (e.g., the second network 199). According to an embodiment, the communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

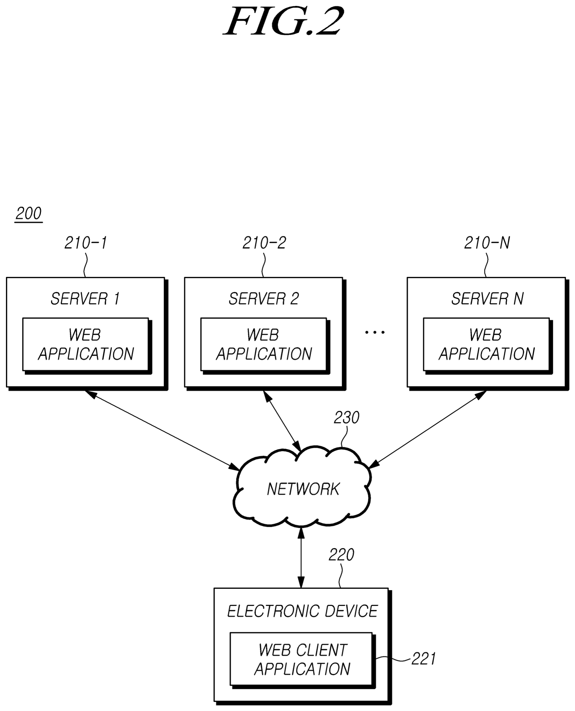

FIG. 2 illustrates an example of a web service providing system according to an embodiment of the disclosure.

According to an embodiment, a web service providing system 200 may be a system for providing a web service. For example, the web service providing system 200 may be a system for providing a service corresponding to a web application in a user's electronic device 220 (e.g., the electronic device 101 of FIG. 1) using a web application stored in a server 210 (e.g., the server 108 of FIG. 1).

According to an embodiment, the web application may be, e.g., a cloud application providing a cloud service. The cloud application may include, but is not limited to, at least one of a SaaS application providing a software as a service (SaaS) service, a DaaS application providing a desktop as a service (DaaS) service, or an IaaS application providing an infrastructure as a service (IaaS) service.

According to an embodiment, SaaS may be a software delivery model where software is hosted on the cloud and accessed through the internet. In case of using a SaaS application, the user's electronic device 220 may access the software through a web browser or an app (e.g., a dedicated app) without installing or maintaining the software on their electronic device. The SaaS application may be, e.g., Microsoft 365^{™} or Dropbox^{™}.

According to an embodiment, DaaS may be a cloud computing model that provides a virtual app or desktop from the cloud to the user's electronic device 220 through the internet. The DaaS application may be, e.g., VMware Horizon^{™}.

According to an embodiment, IaaS may be a cloud computing model where a service provider hosts, maintains, and updates backend infrastructure such as compute, storage, networking, and virtualization. The DaaS application may be, e.g., Microsoft Azure^{™}.

Referring to FIG. 2, the web service providing system 200 may include at least one server 210 and/or at least one user's electronic device 220.

According to an embodiment, the web service providing system 200 may include N (N>=1) servers (210-1, 210-2, ..., 210-N; 210). The server 210 may be, e.g., an example of the server 108 of FIG. 1.

According to an embodiment, the server 210 may include (or store) at least one web application. For example, a first server 210-1 may include a first web application (e.g., a SaaS application), and a second server 210-2 may include a second web application (e.g., a DaaS application).

According to an embodiment, the web service providing system 200 may include at least one electronic device 220. The electronic device 220 may be, e.g., an example of the electronic device 101 of FIG. 1.

According to an embodiment, the electronic device 220 may access at least one web application included in at least one server 210 through a network 230. For example, the electronic device 220 may use at least one web application included in at least one server 210 through the network 230 using a browser or a dedicated app.

According to an embodiment, the electronic device 220 may include at least one web client application (or web client) 221.

According to an embodiment, the web client application 221 may provide a browser function for accessing at least one web application included in at least one server 210.

According to an embodiment, the electronic device 220 may use at least one web application included in at least one server 210 through a browser provided by the web client application 221. For example, the electronic device 220 may use a first web application included in the first server 210-1 and a second web application included in the second server 210-2 through one browser provided by the web client application 221. For example, multiple web applications may be used through one browser. As such, in case that multiple web applications are executed through one browser, memory usage may be reduced compared to using a separate browser for each individual web application.

Through this web client application 221, the electronic device 220 may use each web application through the browser provided by the web client application 221 without individually installing a dedicated app corresponding to each web application in the electronic device 220. Accordingly, the web application provider may reduce the burden of developing a dedicated app, and the user may reduce the burden of installing a dedicated app.

According to an embodiment, the web client application 221 may generate a tab group corresponding to the web application in case that a web application is executed. According to an embodiment, in case that an additional tab of the web client application 221 is created (or opened), the web client application 221 may include the additional tab in the tab group corresponding to the web application. According to an embodiment, in case that an additional tab of the web client application 221 is deleted (or closed), the web client application 221 may remove the additional tab from the tab group corresponding to the web application. According to an embodiment, a tab may be, e.g., a user interface element that allows quick switching between various sets of information or tasks. In case that a tab is selected, content corresponding to the tab may be provided through the display via a page (tab page) corresponding to the selected tab.

According to an embodiment, in case that a web application is terminated, the web client application 221 may remove the tab group corresponding to the web application. The termination of the web application may include, e.g., a case where the web application is terminated in case that the last tab of the web application is closed (e.g., no tabs associated with the web application remain in the browser), or a case where the web application is terminated in case that termination of the web application is requested to the app controller within the platform. Meanwhile, in case that one web application is terminated while multiple web applications are running through the browser, the web client application 221 may maintain the remaining web applications and the associated tab groups.

According to an embodiment, the web client application 221 may close the browser in case that all web applications running through the browser are terminated.

In the disclosure, the browser provided by the electronic device 220 or the web client application 221 may be referred to as a web application browser, web client application browser, cloud application browser, or cloud client application browser.

According to an embodiment, the web client application 221 may be implemented by at least one processor of the electronic device 220. In the disclosure, the operation of the web client application 221 may be represented as the operation of the electronic device 220 or the operation of at least one processor of the electronic device 220.

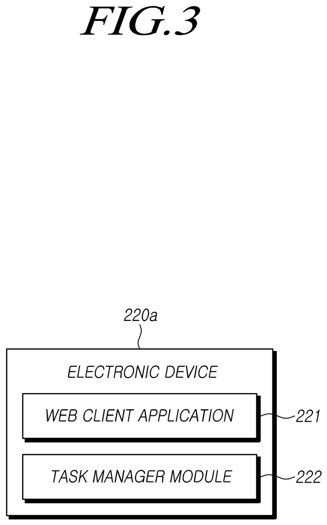

FIG. 3 illustrates an example of an electronic device according to an embodiment of the disclosure.

According to an embodiment, an electronic device 220a may be, e.g., an example of the electronic device 220 included in the web service providing system (e.g., the web service providing system 200 of FIG. 2).

Referring to FIG. 3, the electronic device 200a may include a web client application 221 and a task manager module 222. For example, the electronic device 220a may further include the task manager module 222 compared to the electronic device 220 of FIG. 2. In the disclosure, the task manager module 222 may also be referred to as a task display device.

According to an embodiment, the task manager module 222 may be a module for providing information about at least one web application to a user.

As an example, the task manager module 222 may provide information about a currently running web application to the user. For example, the task manager module 222 may display information indicating the execution status (e.g., running status, terminated status) of a web application on the screen (or display) of the electronic device 220. For example, the task manager module 222 may display information indicating the execution status of a web application that may be executed through the browser of the web client application 221 on the screen of the electronic device 220. Accordingly, the user may identify the execution status of the web application.

As an example, the task manager module 222 may provide information about a selected web application to the user. For example, the task manager module 222 may display information indicating that the web application is currently selected on the screen (or display) of the electronic device 220. Accordingly, the user may identify the currently selected web application.

As an example, the task manager module 222 may provide information about a web application to be executed to the user. For example, the task manager module 222 may display a user interface (UI) corresponding to a web application on the screen (or display) of the electronic device 220. For example, the task manager module 222 may display an application selection UI (e.g., icon, etc.) corresponding to a web application that may be executed through the browser of the web client application 221 on the screen of the electronic device 220. Accordingly, the user may identify executable web applications.

According to an embodiment, the application selection UI may provide an entry point for accessing the web application through the browser. For example, the application selection UI may be associated with the access address (e.g., uniform resource locator (URL)) of the web application.

According to an embodiment, the web client application 221 may interact (or communicate) with the task manager module 222.

For example, in case that a web application is executed through the browser provided by the web client application 221, the web client application 221 may notify the task manager module 222 that the web application is running.

For example, in case that a web application running through the browser provided by the web client application 221 is terminated, the web client application 221 may notify the task manager module 222 that the web application has been terminated.

According to an embodiment, the task manager module 222 may perform at least one of the above-described operations based on information (or data) received from the web client application 221.

According to an embodiment, the web client application 221 and/or the task manager module 222 may be implemented by at least one processor of the electronic device 220. In the disclosure, the operation of the web client application 221 (or web client) and/or the task manager module 222 may be represented as the operation of the electronic device 220 or the operation of at least one processor of the electronic device 220.

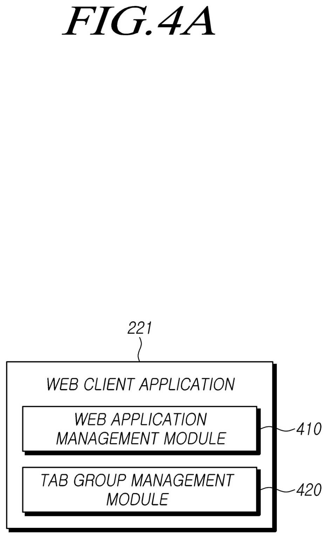

FIG. 4A illustrates an example of a web client application according to an embodiment of the disclosure.

Referring to FIG. 4A, the web client application 221 may include a web application management module 410 and/or a tab group management module 420.

According to an embodiment, the web application management module 410 may manage at least one web application executed through the web client application 221. For example, the web application management module 410 may add or delete web application(s) executed through the browser of the web client application 221. For example, the web application management module 410 may manage information about the web application executed through the browser of the web client application 221 (e.g., the access address (e.g., URL) of the web application) for each web application.

According to an embodiment, the web client application 221 may transmit a request to execute or terminate the web application to a server including the web application using information about the web application.

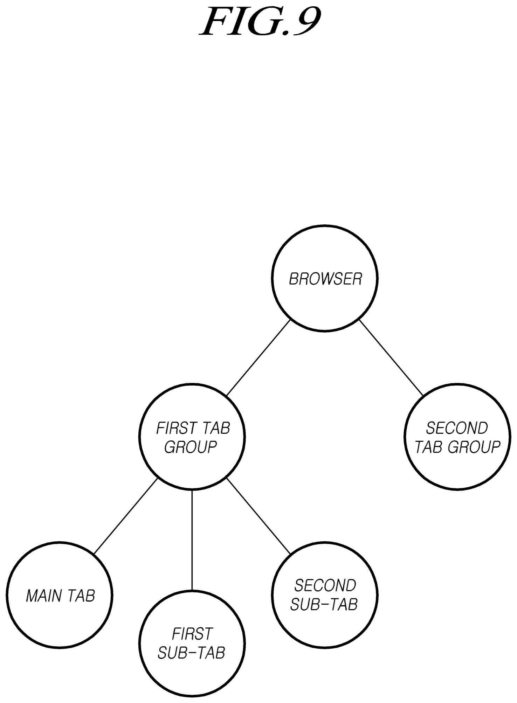

According to an embodiment, the tab group management module 420 may manage a tab group for at least one web application. For example, the tab group management module 420 may create, read, update, and/or delete a tab group corresponding to each of at least one web application. For example, the tab group management module 420 may add or delete tab(s) associated with the web application within the tab group corresponding to each of at least one web application. An example of the structure of the tab group(s) managed by the tab group management module 420 and the tab(s) belonging to each tab group is described below with reference to FIG. 9.

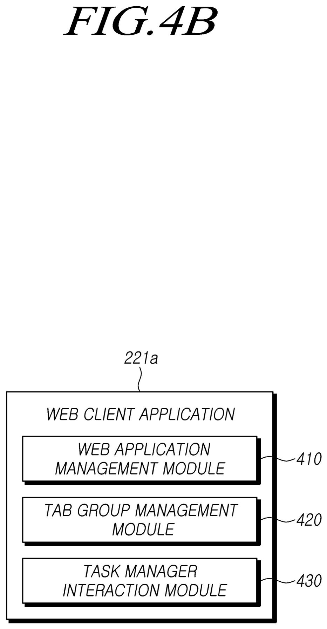

FIG. 4B illustrates an example of a web client application according to an embodiment of the disclosure.

The web client application 221a of FIG. 4B may be an example of the web client application 221 of FIG. 2, FIG. 3, or FIG. 4A.

Referring to FIG. 4B, the web client application 221a may include a web application management module 410, a tab group management module 420, and/or a task manager interaction module 430. For example, the web client application 221a of FIG. 4B may further include the task manager interaction module 430 compared to the web client application 221 of FIG. 2, FIG. 3, or FIG. 4A.

The task manager interaction module 430 may interact (or communicate) with the task manager module (e.g., the task manager module 222 of FIG. 3). For example, in case that a web application is executed through the browser provided by the web client application 221a, the web task manager interaction module 430 may notify the task manager module that the web application is running. For example, in case that a web application running through the browser provided by the web client application 221a is terminated, the task manager interaction module 430 may notify the task manager module that the web application has been terminated.

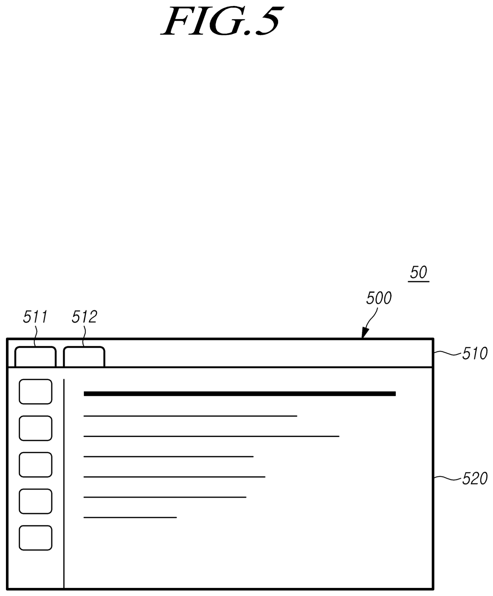

FIG. 5 illustrates an example of a browser for providing a web application according to an embodiment of the disclosure.

According to an embodiment, a web application browser (hereinafter, browser) 50 may be provided and/or controlled by the electronic device (e.g., the electronic devices 220, 220a of FIG. 2 and FIG. 3) (or the web client application (e.g., the web client applications 221, 221a of FIG. 2, FIG. 3, FIG. 4A, and FIG. 4B)).

Referring to FIG. 5, the browser 50 may provide at least one browser window 500.

According to an embodiment, each browser window 500 (or browser 50) may include a tab display area 510 and/or a content display area 520.

According to an embodiment, the tab display area 510 may be an area for displaying at least one tab associated with at least one web application.

According to an embodiment, the electronic device may display at least one tab and/or at least one group tab in the tab display area 510. For example, as illustrated in FIG. 5, the electronic device may display a first tab 511 and a second tab 512 in the tab display area 510 in a preset manner (e.g., in a row direction or horizontal direction).

According to an embodiment, the electronic device may display tabs associated with the same web application (e.g., tabs belonging to the same tab group) adjacent to each other within the tab display area 510. For example, in case that the first tab 511 and the second tab 512 belong to the same tab group, the first tab 511 and the second tab 512 may be displayed consecutively.

According to an embodiment, the electronic device may display tabs associated with different web applications (e.g., tabs belonging to different tab groups) separately from each other within the tab display area 510. For example, in case that the first tab 511 and the second tab 512 belong to different tab groups, the first tab 511 and the second tab 512 may be displayed in separate areas. For example, in case that the first tab 511 and the second tab 512 belong to different tab groups, the first tab 511 and the second tab 512 may each include information indicating the tab group to which they belong.

According to an embodiment, the content display area 520 may be an area for displaying content associated with a web application.

According to an embodiment, the electronic device may display content associated with a running web application in the content display area 520. For example, the content display area 520 may display content associated with a page (tab page) of the web application corresponding to the browser window (or the tab). For example, the content display area may display content (or service screen) corresponding to a selected tab through a tab page corresponding to the tab.

According to an embodiment, the electronic device may display the service screen through the browser window 500. The service screen may be, e.g., a screen for providing content of the web application corresponding to the tab. For example, the service screen of the first web application may be a screen including content of the first web application corresponding to the tab. According to an embodiment, the service screen may be provided through the content display area 520 within the browser window, but the disclosure is not limited thereto.

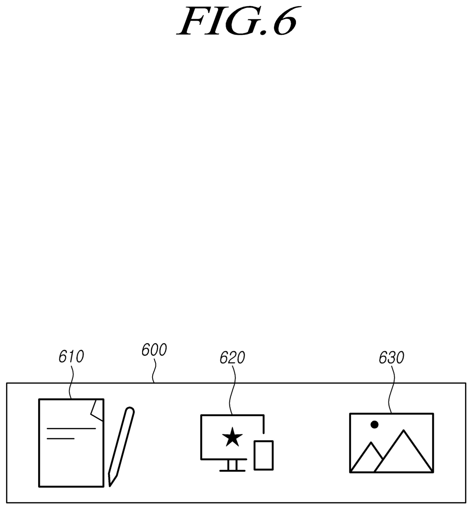

FIG. 6 illustrates an example of an application execution display area according to an embodiment of the disclosure.

The application execution display area 600 may be, e.g., an area for displaying running web application(s) and/or web application(s) to be executed. According to an embodiment, the application execution display area 600 may be provided and/or controlled by the electronic device (e.g., the electronic devices 220, 220a of FIG. 2 and FIG. 3) (or the task manager module (e.g., the task manager module 420 of FIG. 3)).

Referring to FIG. 6, the application execution display area 600 may include at least one application selection UI/item.

According to an embodiment, the application selection UI may include a UI (e.g., icon, but not limited thereto) for selecting the web application.

According to an embodiment, the electronic device may display at least one application selection UI in the application execution display area 600. For example, the electronic device may display a first application selection UI 610 for selecting a first web application, a second application selection UI 620 for selecting a second web application, and/or a third application selection UI 630 for selecting a third web application in the application execution display area 600.

According to an embodiment, the application selection UI may be associated with the access address (e.g., URL) of the web application. For example, the first application selection UI 610 may be associated with the access address of the first web application, the second application selection UI 620 may be associated with the access address of the second web application, and the third application selection UI 630 may be associated with the access address of the third web application.

According to an embodiment, in case that a web application is selected through the application selection UI, the electronic device may provide a function dedicated to the web application. The function dedicated to the web application may include, e.g., a key function (e.g., shortcut key function) dedicated to the web application, but the disclosure is not limited thereto. For example, in case that the first application selection UI 610 is selected, the electronic device may provide at least one first shortcut key function dedicated to the first web application. Alternatively, in case that the second application selection UI 620 is selected, the electronic device may provide a second shortcut key function dedicated to the second web application. Alternatively, in case that the third application selection UI 630 is selected, the electronic device may provide a third shortcut key function dedicated to the third web application.

According to an embodiment, the application selection UI displayed in the application execution display area 600 (or the web application corresponding to the application selection UI) may be preloaded at the time of distribution of the platform (e.g., Android platform). For example, the first application selection UI 610 and the second application selection UI 620 may be preloaded.

According to an embodiment, the application selection UI displayed in the application execution display area 600 (or the web application corresponding to the application selection UI) may be added by the user. For example, the third application selection UI 630 may not be preloaded but may be added by the user. As such, web applications added by the user may be executed through one browser together with preloaded web application(s).

According to an embodiment, the electronic device may use web application(s) corresponding to the application selection UI(s) displayed in the application execution display area 600 through one browser. For example, the electronic device may use (or execute) at least one of the first web application corresponding to the first application selection UI 610, the second web application corresponding to the second application selection UI 620, or the third web application corresponding to the third application selection UI 630 through one browser.

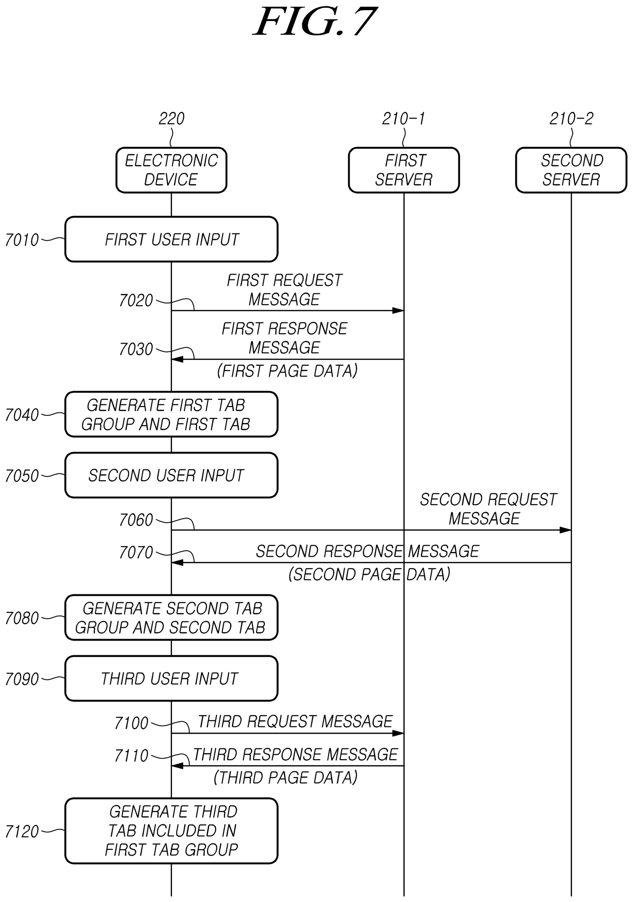

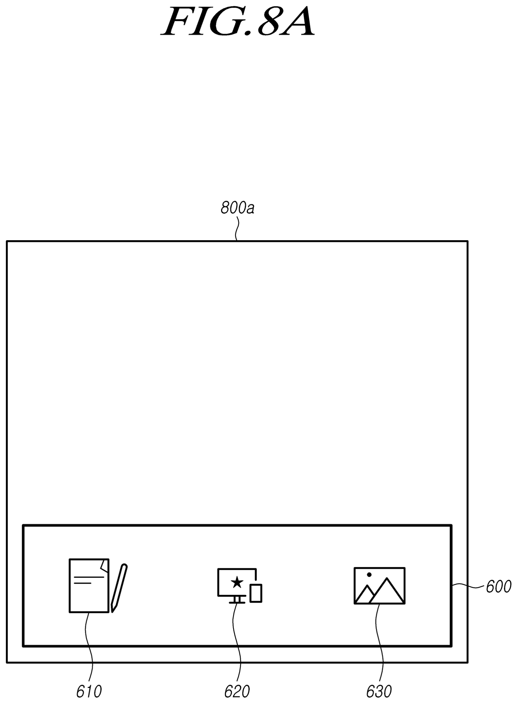

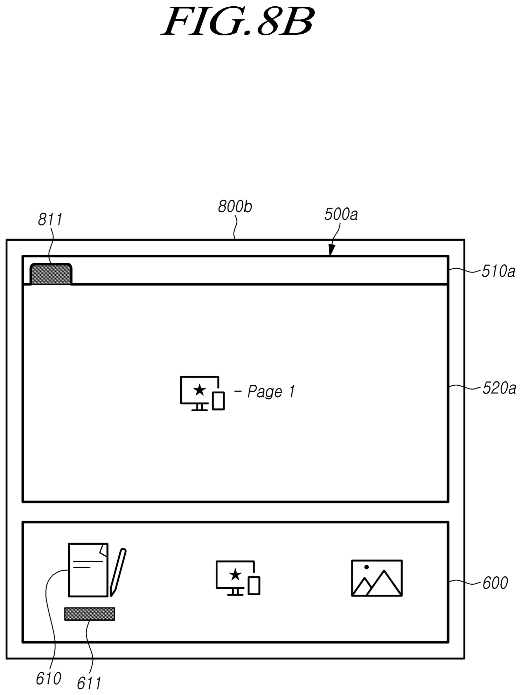

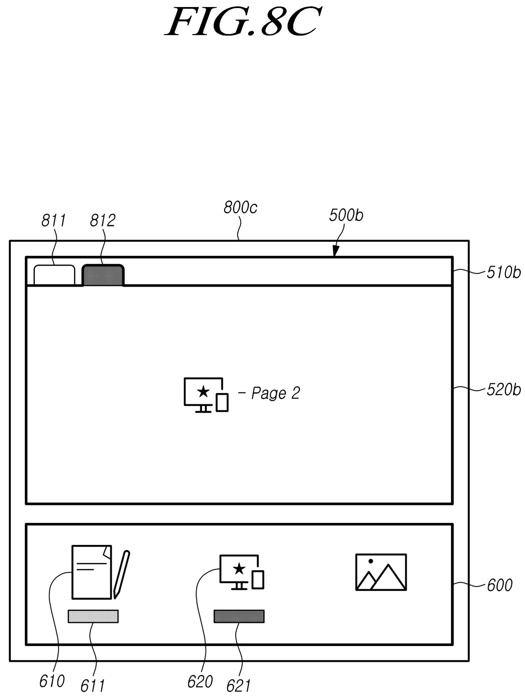

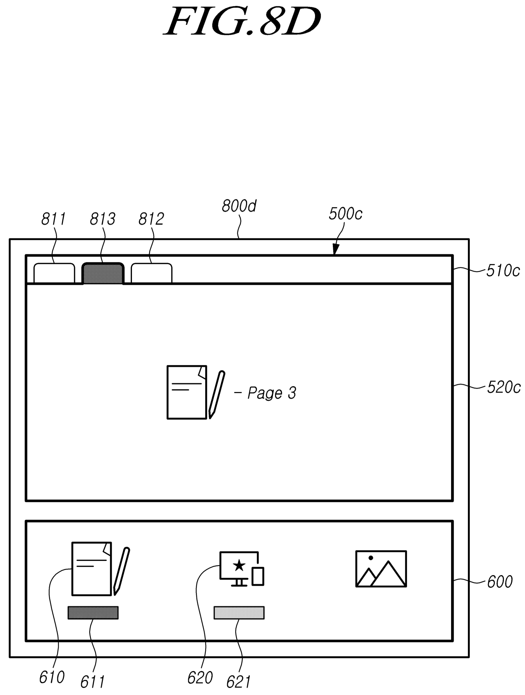

FIG. 7 is a flowchart illustrating a web service providing method according to an embodiment of the disclosure. FIG. 8A illustrates an example of a screen of an electronic device including an application execution display area according to an embodiment of the disclosure. FIG. 8B illustrates an example of a screen of an electronic device including a browser displaying a first browser window according to an embodiment of the disclosure. FIG. 8C illustrates an example of a screen of an electronic device including a browser displaying a second browser window according to an embodiment of the disclosure. FIG. 8D illustrates an example of a screen of an electronic device including a browser displaying a third browser window according to an embodiment of the disclosure.

In the embodiment of FIG. 7, the web service providing method is assumed to be performed by, e.g., the electronic devices 220, 220a of FIG. 2 and FIG. 3, the first server 210-1 of FIG. 2 including the first web application, and the second server 210-2 of FIG. 2 including the second web application, but the disclosure is not limited thereto. For example, the web service providing method may be performed by the electronic devices 220, 220a of FIG. and FIG. 3, and one server (e.g., the first server 210-1 of FIG. 2) including the first web application and the second web application.

Referring to FIG. 7, in operation 7010, the electronic device 220 may obtain (or receive) a first user input (or first execution request) for executing the first web application.

According to an embodiment, the first user input may be, e.g., a user input selecting a first application selection UI (e.g., icon) corresponding to the first web application displayed on the screen (or display) of the electronic device 220. For example, the first user input may be an initial user input selecting the first application selection UI (e.g., icon) in a state in which the first web application is not executed.

According to an embodiment, the first application selection UI may be displayed within the application execution display area within the screen of the electronic device 220. For example, as in FIG. 8A, the first application selection UI 610 (e.g., marker) may be displayed in the application execution display area 600 within the first screen 800a of the electronic device 220.

According to an embodiment, the first application selection UI may be associated with the access address (e.g., URL) of the first web application.

According to an embodiment, the first execution request may be based on the first user input described above.

In operation 7020, the electronic device 220 may transmit a first request message requesting execution of the first web application to the first server 210-1 based on the first user input (or first execution request).

According to an embodiment, the electronic device 220 may transmit a first request message requesting execution of the first web application through the browser to the first server 210-1 using the access address of the first web application associated with the first application selection UI selected by the first user input.

According to an embodiment, the first request message may include a command requesting execution of the first web application.

In operation 7030, the electronic device 220 may receive a first response message responding to the first request message from the first server 210-1.

According to an embodiment, the first server 210-1 may generate a first response message based on the first request message and transmit the first response message to the electronic device 220.

According to an embodiment, the first response message may include data of a first page associated with first content (e.g., main content) of the first web application (hereinafter referred to as first page data). The first page data may be used, e.g., to display the first content in the first browser window of the browser.

In operation 7040, the electronic device 220 may generate a first tab group corresponding to the first web application and a first tab corresponding to the first page.

According to an embodiment, in case that the first web application is executed (e.g., in case that the first response message including the first page data is received), the electronic device 220 may generate a first tab group corresponding to the first web application. As such, even without separate user input for creating a tab group, in case that a web application is executed, the electronic device may automatically generate a tab group corresponding to the web application. Accordingly, in a circumstance in which multiple web applications are executed by one browser, the electronic device may efficiently manage the tab group corresponding to each web application.

According to an embodiment, the first tab group may include a first tab corresponding to the first page. The first tab corresponding to the first page may be, e.g., a main tab corresponding to the main page of the first web application.

According to an embodiment, in case that the first web application is executed, the electronic device 220 may display status information indicating that the first web application is running in the application execution display area. For example, as illustrated in FIG. 8B, the electronic device 220 may display status information 611 indicating that the first web application is running together with the first application selection UI 610 in the application execution display area 600 of the screen 800b.

According to an embodiment, the electronic device 220 may display the first content in the first browser window of the browser using the first page data. For example, as illustrated in FIG. 8B, the electronic device 220 may display the first content in the content display area 520a within the first browser window 500a.

According to an embodiment, the electronic device 220 may display the first tab included in the first tab group in the tab display area within the browser. For example, as illustrated in FIG. 8B, the electronic device 220 may display the first tab 811 included in the first tab group in the tab display area 510a within the first browser window 500a.

In operation 7050, the electronic device 220 may obtain (or receive) a second user input (or second execution request) for executing the second web application.

According to an embodiment, the second user input may be, e.g., a user input selecting a second application selection UI (e.g., icon) corresponding to the second web application displayed on the screen (or display) of the electronic device 220. For example, the second user input may be an initial user input selecting the second application selection UI (e.g., icon) in a state in which the second web application is not executed.

According to an embodiment, the second application selection UI may be displayed within the application execution display area within the screen of the electronic device 220. As an example, the second application selection UI may be displayed within the application execution display area within the screen of the electronic device 220 together with the first application selection UI. For example, as in FIG. 8C, the second application selection UI 620 may be displayed in the application execution display area 600 within the screen 800c of the electronic device 220 together with the first application selection UI 610.

According to an embodiment, the second application selection UI may be associated with the access address (e.g., URL) of the second web application.

According to an embodiment, the second execution request may be based on the second user input described above.

In operation 7060, the electronic device 220 may transmit a second request message requesting execution of the second web application to the second server 210-2 based on the second user input (or second execution request).

According to an embodiment, the electronic device 220 may transmit a second request message requesting execution of the second web application through the browser to the second server 210-2 using the access address of the second web application associated with the second application selection UI selected by the second user input.

According to an embodiment, the second request message may include a command requesting execution of the second web application.

In operation 7070, the electronic device 220 may receive a second response message responding to the second request message from the second server 210-2.

According to an embodiment, the second server 210-2 may generate a second response message based on the second request message and transmit the second response message to the electronic device 220.

According to an embodiment, the second response message may include data of a second page associated with second content (e.g., main content) of the second web application (hereinafter referred to as second page data). The second page data may be used, e.g., to display the second content in the second browser window of the browser.

In operation 7080, the electronic device 220 may generate a second tab group corresponding to the second web application and a second tab corresponding to the second page.

According to an embodiment, in case that the second web application is executed (e.g., in case that the second response message including the second page data is received), the electronic device 220 may generate a second tab group corresponding to the second web application. As such, even without separate user input for creating a tab group, in case that a web application is executed, the electronic device may automatically generate a tab group corresponding to the web application. Accordingly, in a circumstance in which multiple web applications are executed by one browser, the electronic device may efficiently manage the tab group corresponding to each web application.

According to an embodiment, the second tab group may include a second tab corresponding to the second page. The second tab corresponding to the second page may be, e.g., a main tab corresponding to the main page of the second web application.

According to an embodiment, in case that the second web application is executed, the electronic device 220 may display status information indicating that the second web application is running in the application execution display area. For example, as illustrated in FIG. 8C, the electronic device 220 may display status information 611 indicating that the first web application is running together with the first application selection UI 610 in the application execution display area 600 of the screen 800c, and display status information 621 (e.g., marker) indicating that the second web application is running together with the second application selection UI 620 in the application execution display area 600 of the screen 800c.

According to an embodiment, the electronic device 220 may display status information corresponding to a currently selected web application among running web applications in a different manner (e.g., different color, different size) from status information corresponding to a web application not currently selected. For example, as illustrated in FIG. 8C, the electronic device 220 may set the color of the status information 621 corresponding to the currently selected second web application to be different from the color of the status information 611 corresponding to the first web application not currently selected. Accordingly, the currently selected web application among running web applications may be identified by the user.

According to an embodiment, the electronic device 220 may display the second content in the second browser window of the browser using the second page data. For example, as illustrated in FIG. 8C, the electronic device 220 may display the second content in the content display area 520b of the second browser window 500b.

According to an embodiment, the electronic device 220 may display the second tab included in the second tab group in the tab display area within the browser. For example, the first tab belonging to the first tab group and the second tab belonging to the second tab group may be displayed together in the tab display area within the browser. As an example, in case that tabs are disposed in a row direction from left to right, the second tab belonging to the second tab group may be displayed to the right of the first tab belonging to the first tab group. For example, as illustrated in FIG. 8C, the electronic device 220 may display the second tab 812 included in the second tab group to the right of the first tab 811 included in the first tab group within the tab display area 510b within the second browser window 500b. As an example, even when tabs are disposed in a row direction, the second tab 812 belonging to the second tab group may be displayed to the left of the first tab 811 belonging to the first tab group. For example, the electronic device 220 may display the tab group to which the selected tab (e.g., the second tab 812) belongs (or all tabs included in the tab group) at the leftmost position within the tab display area 510b.

In operation 7090, the electronic device 220 may obtain (or receive) a third user input (or service request) for adding a third page associated with the first web application.

According to an embodiment, the third user input may be, e.g., a user input selecting a UI/item related to page addition within the first content associated with the first page corresponding to the first tab. For example, in case that the first web application is a document creation application (e.g., MS Office 365^{™}) including at least one program, the first content associated with the first page (e.g., main page) may provide a UI for selecting each program, and the electronic device may obtain a third user input selecting a specific program through the UI. In this case, based on the third user input, a third page corresponding to the selected program may be added.

According to an embodiment, the service request may be based on the third user input described above.

In operation 7100, the electronic device 220 may transmit a third request message for requesting page addition of the first web application to the first server 210-1 based on the third user input (or service request).

According to an embodiment, the electronic device 220 may transmit a third request message for adding a third page including third content (e.g., sub content) corresponding to the UI related to page addition selected by the third user input to the first server 210-1 using the access address of the first web application.

According to an embodiment, the third request message may include a command requesting addition of the third page.

In operation 8110, the electronic device 220 may receive a third response message responding to the third request message from the first server 210-1.

According to an embodiment, the first server 210-1 may generate a third response message based on the third request message and transmit the third response message to the electronic device 220.

According to an embodiment, the third response message may include data of a third page associated with the third content (hereinafter referred to as third page data). The third page data may be used, e.g., to display the third content in the third browser window of the browser.

In operation 8120, the electronic device 220 may generate a third tab included in the first tab group.

According to an embodiment, in case that the third page is added (e.g., in case that the third response message including the third page data is received), the electronic device 220 may generate a third tab corresponding to the third page and include the third tab in the first tab group. The third tab corresponding to the third page may be, e.g., a sub tab (first sub tab) corresponding to a sub page of the first web application.

As such, even without separate user input for determining the tab group to which the additional tab belongs, in case that an additional tab is created, the electronic device includes the additional tab in the tab group corresponding to the web application associated with the additional tab, so the electronic device may efficiently group and manage pages associated with each web application provided through one browser.

According to an embodiment, the electronic device 220 may display status information corresponding to a currently selected web application among running web applications in a different manner (e.g., different color, different size) from status information corresponding to a web application not currently selected. For example, as illustrated in FIG. 8D, the electronic device 220 may set the color of the status information 611 corresponding to the currently selected first web application to be different from the color of the status information 621 corresponding to the second web application not currently selected within the application execution display area 600 within the screen 800d. Accordingly, the currently selected web application among running web applications may be identified by the user.

According to an embodiment, the electronic device 220 may display the third content in the third browser window of the browser using the third page data. For example, as illustrated in FIG. 8D, the electronic device 220 may display the third content in the content display area 520c within the third browser window 500c.

According to an embodiment, the electronic device 220 may display the third tab included in the first tab group in the tab display area within the browser. For example, the first tab and third tab belonging to the first tab group, and the second tab belonging to the second tab group may be displayed together in the tab display area within the browser. As an example, the third tab belonging to the first tab group may be displayed between the first tab belonging to the first tab group and the second tab belonging to the second tab group. For example, in case that tabs are disposed in a row direction from left to right, the third tab belonging to the first tab group may be displayed to the right of the first tab belonging to the first tab group, and the second tab belonging to the second tab group may be displayed to the right of the third tab belonging to the first tab group. For example, as illustrated in FIG. 8D, the electronic device 220 may display the third tab 813 belonging to the first tab group to the right of the first tab 811 belonging to the first tab group, and display the second tab 812 belonging to the second tab group to the right of the third tab 813 belonging to the first tab group within the tab display area 510c within the third browser window 500c. In this case, as illustrated, the first tab 811 and the third tab 813 belonging to the same tab group are automatically grouped and displayed consecutively, and the second tab 812 belonging to a different tab group may be displayed separately from the third tab 813. Meanwhile, in general tab-based browsing, newly added tabs are always disposed at the rightmost position within the tab row, and tabs are not automatically grouped and managed by tab group, making it difficult to manage tasks. Therefore, in case of following the tab display method of the disclosure described above, tabs are automatically managed by tab group, so users may identify whether the tabs belong to the same tab group or different tab groups, and may efficiently manage tasks associated with tabs belonging to the same web application.

Meanwhile, in the examples of FIGS. 8B to 8D, the area where the browser is displayed and the application execution display area are illustrated as being displayed on one screen, but this is not limited thereto. For example, the area where the browser is displayed and the application execution display area may be displayed through separate screens.

FIG. 7 illustrates an example of a web service providing method, but various changes may be made to FIG. 7. For example, although the web service providing method of FIG. 7 illustrates various operations/steps in a sequential order, the various steps of FIG. 7 may overlap, be performed in parallel, or be performed in a different order. For example, operations 7050 to 7080 associated with the second web application of FIG. 7 may be performed after operations 7090 to 7120 associated with the additional tab of the first web application.

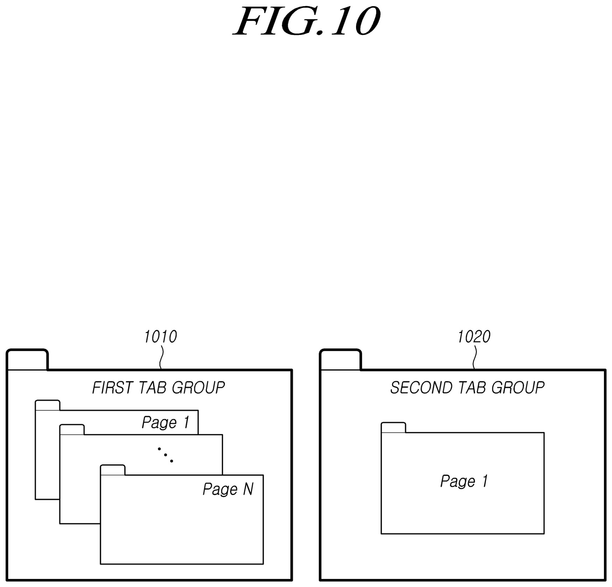

FIG. 9 illustrates an example of a tab group structure according to an embodiment of the disclosure. FIG. 10 illustrates an example of a page structure associated with a tab group according to an embodiment of the disclosure.

According to an embodiment, a browser (e.g., the browser 50 of FIG. 5) may be associated with at least one tab group. For example, as illustrated in FIG. 9, the browser may be associated with a first tab group corresponding to the first web application and a second tab group corresponding to the second web application. For example, in case that the first web application and the second web application are executed through the browser, the browser may be associated with the first tab group corresponding to the first web application and the second tab group corresponding to the second web application.

According to an embodiment, a tab group may be associated with at least one tab. For example, as illustrated in FIG. 9, the first tab group may include a main tab, a first sub tab, and/or a second sub tab. For example, the second tab group may include one tab.

According to an embodiment, each tab within a tab group may be associated with the corresponding page. For example, as illustrated in 1010 of FIG. 10, the first tab to the Nth tab within the first tab group may be associated with the first page to the Nth page, respectively. For example, as illustrated in 1020 of FIG. 10, the first tab within the second tab group may be associated with the first page.

According to an embodiment, each page associated with each tab may be provided through a separate browser window (e.g., the browser window 500 of FIG. 5). For example, each of the first page to the Nth page associated with the first tab to the Nth tab within the first tab group may be provided through the first browser window to the Nth browser window of the browser, respectively. For example, content included in the first page associated with the first tab within the first tab group may be displayed in the content display area (e.g., the content display area 520 of FIG. 5) within the first browser window of the browser.

According to an embodiment, the electronic device may display a representative tab corresponding to the tab group to which the tab belongs through the browser (or browser window). For example, the electronic device may display a first representative tab corresponding to the first tab group and a second representative tab corresponding to the second tab group in the tab display area within the browser (or browser window). According to an embodiment, the representative tab may be, e.g., a main tab of the tab group, a group tab corresponding to the tab group, or any type of tab representing the tab group, but the disclosure is not limited thereto.

According to an embodiment, in case that the representative tab is selected, the electronic device may display all tabs belonging to the tab group corresponding to the representative tab. For example, in case that either the first representative tab corresponding to the first tab group or the second representative tab corresponding to the second tab group is selected, the electronic device may display all tabs belonging to the tab group corresponding to the selected representative tab within the tab display area of the web browser (e.g., the tab display area 510 of FIG. 5). For example, as in 1010 of FIG. 10, in case that the first tab group includes the first tab to the Nth tab, in case that the first representative tab corresponding to the first tab group is selected, the electronic device may display the first tab to the Nth tab belonging to the first tab group within the tab display area.

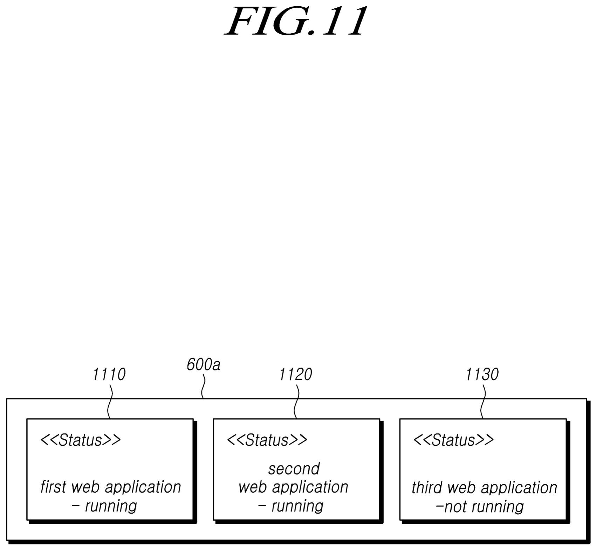

FIG. 11 illustrates an example of an application execution display area according to an embodiment of the disclosure.

The application execution display area 600a of FIG. 11 may be, e.g., an example of the application execution display 600 of FIG. 6.

Referring to FIG. 11, the application execution display area 600a may include a first area 1110 displaying the execution status of the first web application, a second area 1120 displaying the execution status of the second web application, and a third area 1130 displaying the execution status of the third web application.

According to an embodiment, each area within the application execution display area 600a may display whether the corresponding web application is running or not running. For example, as illustrated in FIG. 11, the first area 1110 may indicate that the first web application is running, the second area 1120 may indicate that the second web application is running, and the third area 1130 may indicate that the third web application is not running.

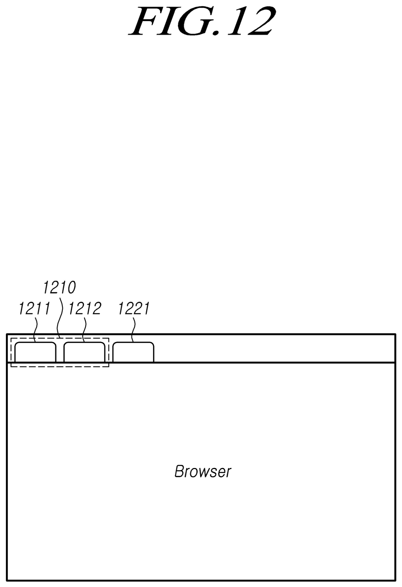

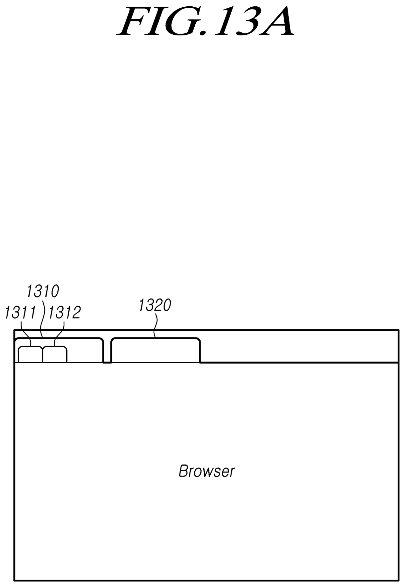

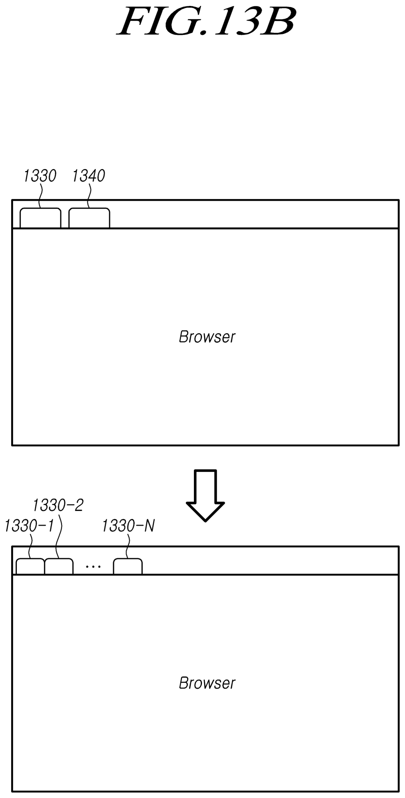

FIG. 12 illustrates an example of a method of displaying tabs within multiple tab groups according to an embodiment of the disclosure. FIG. 13A illustrates an example of a method of displaying tabs within multiple tab groups according to an embodiment of the disclosure. FIG. 13B illustrates an example of a method of displaying tabs within multiple tab groups according to an embodiment of the disclosure.

According to an embodiment, the electronic device (e.g., the electronic devices 220, 220a of FIG. 2 and FIG. 3) may arrange tabs belonging to the same tab group adjacent to each other and arrange tabs belonging to different tab groups separately from each other. For example, as illustrated in FIG. 12, the electronic device may arrange the first tab 1211 and the second tab 1212 belonging to the first tab group adjacent to each other (e.g., consecutively disposed) within the first area 1210, and may arrange the third tab 1221 belonging to the second tab group in an area that does not overlap the first area 1210. For example, even when the first tab 1211 belonging to the first tab group is created, then the third tab 1221 belonging to the second tab group is created, and then the second tab 1212 belonging to the first tab group is additionally created, the second tab 1212 may be disposed adjacent to the first tab 1211 belonging to the same tab group (e.g., to the right of the first tab 1211) rather than being created to the right of the third tab 1221. Accordingly, the user may identify whether the tabs belong to the same tab group or different tab groups.

According to an embodiment, the electronic device may arrange tabs belonging to the tab group in the form of sub tabs within a group tab corresponding to the tab group. For example, as illustrated in FIG. 13A, the electronic device may display a first group tab 1310 corresponding to the first tab group and a second group tab 1320 corresponding to the second tab group within the browser, and display the first tab 1311 and the second tab 1312 belonging to the first tab group within the first group tab 1310. For example, even when the first tab 1311 belonging to the first tab group is created, then the second group tab 1320 corresponding to the second tab group is created, and then the second tab 1312 belonging to the first tab group is additionally created, the second tab 1312 may be disposed within the first group tab 1310 adjacent to the first tab 1211 belonging to the same tab group (e.g., to the right of the first tab 1211) rather than being created to the right of the second group tab 1320. Accordingly, the user may identify whether the tabs belong to the same tab group or different tab groups. Further, the user may identify which tab group the tab belongs to.

According to an embodiment, the electronic device may display a representative tab corresponding to the tab group to which the tab belongs through the browser (or browser window). For example, as illustrated in the upper portion of FIG. 13B, the electronic device may display a first representative tab 1330 corresponding to the first tab group and a second representative tab 1340 corresponding to the second tab group in the tab display area within the browser (or browser window). According to an embodiment, the representative tab may be, e.g., a main tab of the tab group, a group tab corresponding to the tab group, or any type of tab representing the tab group, but the disclosure is not limited thereto.

According to an embodiment, in case that the representative tab is selected, the electronic device may display all tabs belonging to the tab group corresponding to the representative tab. For example, in case that either the first representative tab 1330 corresponding to the first tab group or the second representative tab 1340 corresponding to the second tab group is selected, the electronic device may display all tabs belonging to the tab group corresponding to the selected representative tab within the tab display area of the web browser. For example, as in the lower portion of FIG. 13B, in case that the first representative tab 1330 corresponding to the first tab group is selected, the electronic device may display the first tab 1330-1, the second tab 1330-2 to the Nth tab 1330-N belonging to the first tab group within the tab display area.

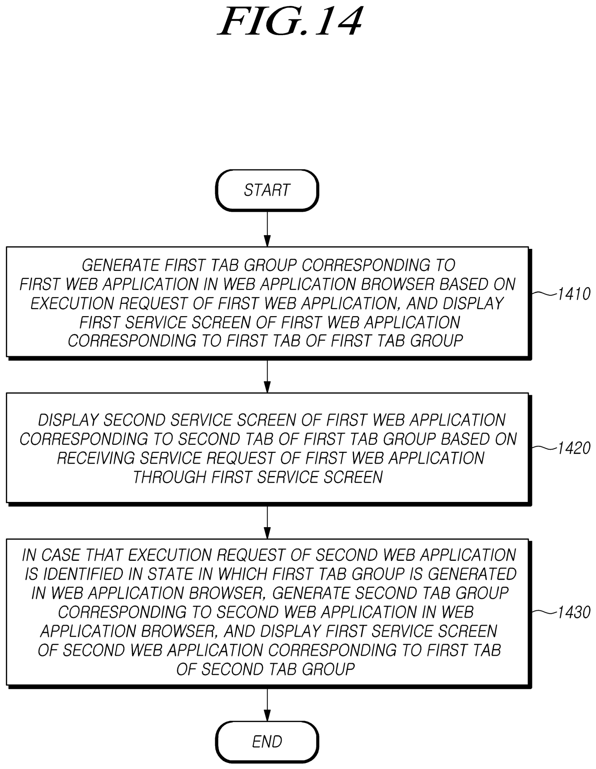

FIG. 14 is a flowchart illustrating an operation method of an electronic device according to an embodiment of the disclosure.

Referring to FIG. 14, the electronic device (e.g., the electronic devices 220, 220a of FIG. 2 and FIG. 3) may generate a first tab group corresponding to a first web application in a web application browser based on an execution request of the first web application, and display a first service screen of the first web application corresponding to a first tab of the first tab group (e.g., a screen corresponding to the first content (or first page) displayed in the content display area 520a of FIG. 8B) (14010). According to an embodiment, the first service screen of the first web application corresponding to the first tab of the first tab group may be displayed in the content display area (e.g., the content display area 520a of FIG. 8B) through a tab page corresponding to the first tab of the first tab group.

The electronic device may display a second service screen of the first web application corresponding to a second tab of the first tab group (e.g., a screen corresponding to the third content (or third page) displayed in the content display area 520c of FIG. 8D) based on receiving a service request of the first web application through the first service screen (14020). According to an embodiment, the second service screen of the first web application corresponding to the second tab of the first tab group may be displayed in the content display area (e.g., the content display area 520c of FIG. 8D) through a tab page corresponding to the second tab of the first tab group.

In case that an execution request of a second web application is identified in a state in which the first tab group is generated in the web application browser, the electronic device may generate a second tab group corresponding to the second web application in the web application browser, and display a first service screen of the second web application corresponding to a second tab of the second tab group (e.g., a screen corresponding to the second content (or second page) displayed in the content display area 520b of FIG. 8C) (14030). According to an embodiment, the first service screen of the second web application corresponding to the first tab of the second tab group may be displayed in the content display area (e.g., the content display area 520b of FIG. 8C) through a tab page corresponding to the first tab of the second tab group.

According to an embodiment, the web application browser may be configured to display the first tab (e.g., the first tab 811 of FIGS. 8B, 8C, and 8D) and the second tab (e.g., the third tab 813 of FIG. 8D) of the first tab group and the first tab (e.g., the second tab 812 of FIGS. 8C and 8D) of the second tab group, and to display a service screen corresponding to a tab selected based on a user input. According to an embodiment, the service screen corresponding to the tab selected based on the user input may be displayed in the content display area through a tab page corresponding to the tab.

According to an embodiment, the first web application is a software as a service (SaaS) application, and the second web application may be a SaaS application or a desktop as a service (DaaS) application.

According to an embodiment, the electronic device may be further configured to display the first service screen of the first web application through a first browser window of the web application browser (e.g., the first browser window 500a of FIG. 8B), display the second service screen of the first web application through a second browser window of the web application browser (e.g., the third browser window 500c of FIG. 8D), and display the first service screen of the second web application through a third browser window of the web application browser (e.g., the second browser window 500b of FIG. 8C).

According to an embodiment, the second tab of the first web application may be displayed to the right of the first tab of the first web application within the tab display area of the web browser, and the first tab of the second web application may be displayed to the left of the first tab of the first web application or to the right of the second tab of the first web application within the tab display area of the web browser.

According to an embodiment, the second tab of the first web application may be displayed to the right of the first tab of the first web application within the first group tab corresponding to the first tab group within the tab display area of the web browser, and the first tab of the first web application may be displayed within a second group tab corresponding to the second tab group positioned to the left or right of the first group tab.

According to an embodiment, the at least one processor may be further configured to move the tab group to which the tab selected based on the user input belongs to a leftmost position within the tab display area of the web browser.

According to an embodiment, the electronic device may be configured to display a first representative tab corresponding to the first tab group (e.g., the first representative tab 1330 of FIG. 13B) and a second representative tab corresponding to the second tab group (e.g., the second representative tab 1340 of FIG. 13B) within the tab display area of the web browser, and display all tabs belonging to the tab group corresponding to the selected representative tab within the tab display area of the web browser in case that either the first representative tab or the second representative tab is selected.

According to an embodiment, the electronic device may be further configured to display a first application selection user interface (UI) corresponding to the first web application (e.g., the first application selection UI 610 of FIGS. 8A, 8B, 8C, and 8D) and a second application selection UI corresponding to the second web application (e.g., the second application selection UI 620 of FIGS. 8A, 8B, 8C, and 8D) on a screen.

According to an embodiment, the execution request of the first web application may be based on a user input selecting the first application selection UI corresponding to the first web application, the execution request of the second web application may be based on a user input selecting the second application selection UI corresponding to the second web application, the first application selection UI may be associated with the access address of the first web application, and the second application selection UI may be associated with the access address of the second web application.

According to an embodiment, the electronic device may be further configured to provide first status information indicating that the first web application is running through a task manager module in case that the first web application is executed (e.g., the first status information 611 of FIGS. 8B, 8C, and 8D) and provide second status information indicating that the second web application is running through the task manager module in case that the second web application is executed (e.g., the second status information 621 of FIGS. 8C and 8D). The first status information may be associated with the first application selection UI, and the second status information may be associated with the first application selection UI.

According to an embodiment, the electronic device may be further configured to display, as a current browser window on the web application browser, a browser window that was most recently displayed on the web application browser among at least one browser window associated with the first web application in case that a user input selecting the first application selection UI is identified in a state in which the second application selection UI is selected.

According to an embodiment, the electronic device may be further configured to change at least one of the size or color of the first status information in case that a user input selecting the first application selection UI is identified in a state in which the second application selection UI is selected.

According to an embodiment, the electronic device may be further configured to provide at least one first shortcut key function dedicated to the first web application in case that the first application selection UI is selected, and provide a second shortcut key function dedicated to the second web application in case that the second application selection UI is selected.

Meanwhile, the electronic device may also provide a web service through the following operations.

The electronic device (e.g., the electronic devices 220, 220a of FIG. 2 and FIG. 3) may execute the first web application through a web application browser (hereinafter, browser) based on a first user input. For example, the electronic device may execute the first web application by performing at least one of operations 7010 to 7030 of FIG. 7 based on the first user input.

The electronic device may generate a first tab group corresponding to the first web application.

According to an embodiment, in case that the first web application is executed, the electronic device may generate a first tab group corresponding to the first web application. As such, even without separate user input for creating a tab group, in case that a web application is executed, the electronic device may automatically generate a tab group corresponding to the web application. Accordingly, in a circumstance in which multiple web applications are executed by one browser, the electronic device may efficiently manage the tab group corresponding to each web application.

According to an embodiment, the first tab group may include a first tab corresponding to the first page. The first tab corresponding to the first page may be, e.g., a main tab corresponding to the main page of the first web application.

According to an embodiment, in case that the first web application is executed, the electronic device may display status information (e.g., marker) indicating that the first web application is running in the application execution display area.

According to an embodiment, the electronic device may display the first content corresponding to the first page in the first browser window of the browser.

According to an embodiment, the electronic device may display the first tab included in the first tab group in the tab display area within the first browser window of the browser.

The electronic device may execute the first web application through the browser based on a second user input. For example, the electronic device may execute the second web application by performing at least one of operations 7050 to 7080 of FIG. 7 based on the second user input. By executing multiple web applications through one browser in this way, the electronic device may reduce memory usage.

The electronic device may generate a second tab group corresponding to the second web application.

According to an embodiment, in case that the second web application is executed, the electronic device may generate a second tab group corresponding to the second web application. As such, even without separate user input for creating a tab group, in case that a web application is executed, the electronic device may automatically generate a tab group corresponding to the web application. Accordingly, in a circumstance in which multiple web applications are executed by one browser, the electronic device may efficiently manage the tab group corresponding to each web application.

According to an embodiment, the second tab group may include a second tab corresponding to the second page. The second tab corresponding to the second page may be, e.g., a main tab corresponding to the main page of the second web application.

According to an embodiment, in case that the second web application is executed, the electronic device may display status information (e.g., marker) indicating that the second web application is running in the application execution display area.

According to an embodiment, the electronic device may display status information corresponding to a currently selected web application among running web applications in a different manner (e.g., different color, different size) from status information corresponding to a web application not currently selected.

According to an embodiment, the electronic device may display the second content corresponding to the second page in the second browser window of the browser.

According to an embodiment, the electronic device may display the second tab included in the second tab group in the tab display area within the second browser window of the browser.

The electronic device may identify a third user input for adding a third page associated with the first web application. According to an embodiment, the electronic device may obtain a third user input selecting a UI related to page addition within the first content associated with the first page corresponding to the first tab.

The electronic device may generate a third tab corresponding to the third page based on the third user input and include the third tab in the first tab group.

According to an embodiment, in case that the third page is added, the electronic device may generate a third tab corresponding to the third page and include the third tab in the first tab group. The third tab corresponding to the third page may be, e.g., a sub tab (first sub tab) corresponding to a sub page of the first web application.

As such, even without separate user input for determining the tab group to which the additional tab belongs, in case that an additional tab is created, the electronic device includes the additional tab in the tab group corresponding to the web application associated with the additional tab, so the electronic device may efficiently group and manage pages associated with each web application provided through one browser.

According to an embodiment, the electronic device may display status information corresponding to a currently selected web application among running web applications in a different manner (e.g., different color, different size) from status information corresponding to a web application not currently selected. Accordingly, the currently selected web application among running web applications may be identified by the user.

According to an embodiment, the electronic device may display the third content in the third browser window of the browser.

According to an embodiment, the electronic device may display the third tab included in the first tab group in the tab display area within the third browser window of the browser.

According to an embodiment, the first page, the second page, and the third page may be associated with one browser.

According to an embodiment, the first web application may be a SaaS application, and the second web application may be a SaaS application or a DaaS application.

According to an embodiment, the electronic device may display the first content associated with the first page within the first browser window of the browser, display the second content associated with the second page within the second browser window of the browser, and display the third content associated with the third page within the third browser window of the browser.

According to an embodiment, the third tab may be displayed at a position adjacent to the first tab within the tab display area of the third browser window.

According to an embodiment, the third tab may be displayed after the first tab within the first group tab corresponding to the first tab group within the tab display area of the third browser window, and the second tab may be displayed within the second group tab corresponding to the second tab group positioned after the first group tab.

According to an embodiment, the first user input corresponds to a user input selecting a first application selection UI corresponding to the first web application, the second user input corresponds to a user input selecting a second application selection UI corresponding to the second web application, the first application selection UI is associated with the access address of the first web application, and the first application selection UI may be associated with the access address of the second web application.

According to an embodiment, the electronic device may provide first status information indicating that the first web application is running through a task manager module in case that the first web application is executed, and may provide second status information indicating that the second web application is running through the task manager module in case that the second web application is executed. The first status information may be associated with the first application selection UI, and the second status information may be associated with the first application selection UI.

According to an embodiment, in case that a fourth user input selecting the first application selection UI is identified in a state in which the second application selection UI is selected, the electronic device may display, as a current browser window on the web application browser, a browser window that was most recently displayed on the web application browser among at least one browser window associated with the first web application.

According to an embodiment, in case that a fourth user input selecting the first application selection UI is identified in a state in which the second application selection UI is selected, the electronic device may change at least one of the size or color of the first status information.

According to an embodiment, in case that the first application selection UI is selected, at least one first shortcut key function dedicated to the first web application may be provided and, in case that the second application selection UI is selected, at least one second shortcut key function dedicated to the second web application may be provided.

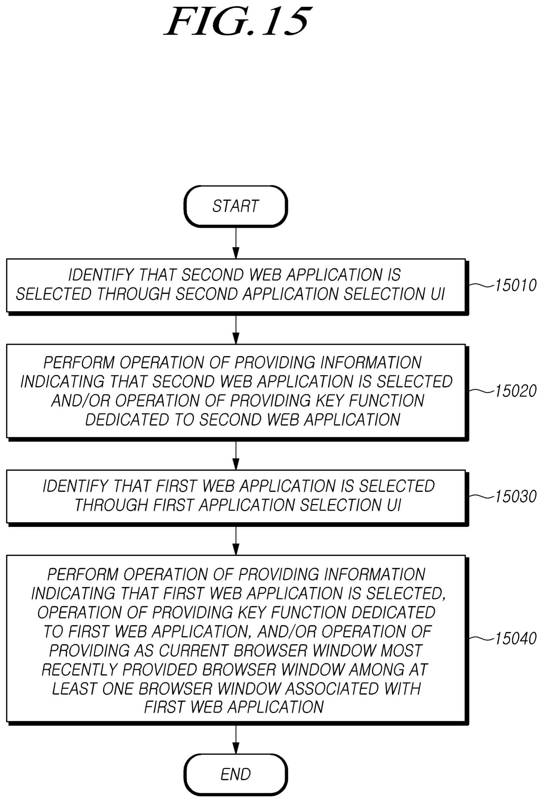

FIG. 15 is a flowchart illustrating an operation method of an electronic device according to an embodiment of the disclosure.

The operation method of the electronic device of FIG. 15 may be, e.g., an operation method performed after the operation method of the electronic device of FIG. 14 (e.g., after the first web application and the second web application are executed), but the disclosure is not limited thereto.

Referring to FIG. 15, in operation 15010, the electronic device (e.g., the electronic devices 220, 220a of FIG. 2 and FIG. 3) may identify that the second web application is selected through the second application selection UI. Through this manipulation of the application selection UI (e.g., icon), the electronic device may operate in the form of a single web application despite multiple web applications being executed through one browser.

In operation 15020, the electronic device may perform an operation of providing information indicating that the second web application is selected and/or an operation of providing a key function (e.g., shortcut key function) dedicated to the second web application.

According to an embodiment, the operation of providing information indicating that the second web application is selected may include an operation of adjusting (or changing) the size or color of the second status information (e.g., the second status information 612 (e.g., marker)) indicating that the second web application is running to indicate that the second web application is selected. Accordingly, the user may identify the currently selected web application.

According to an embodiment, the operation of providing a key function dedicated to the second web application may include an operation of providing at least one shortcut key dedicated to the second web application. Accordingly, convenience for using the second web application may be provided to the user.

In operation 15030, the electronic device may identify that the first web application is selected through the first application selection UI. Through this manipulation of the application selection UI (e.g., icon), the electronic device may operate in the form of a single web application despite multiple web applications being executed through one browser.

In operation 15040, the electronic device may perform an operation of providing information indicating that the second web application is selected, an operation of providing a key function (e.g., shortcut key function) dedicated to the second web application, and/or an operation of providing as a current browser window the browser window most recently provided among at least one browser window associated with the first application.

According to an embodiment, the operation of providing information indicating that the first web application is selected may include an operation of adjusting (or changing) the size or color of the first status information (e.g., the first status information 611 (e.g., marker)) indicating that the first web application is running to indicate that the first web application is selected. Accordingly, the user may identify the currently selected web application.

According to an embodiment, the operation of providing a key function dedicated to the first web application may include an operation of providing at least one shortcut key dedicated to the first web application. Accordingly, convenience for using the first web application may be provided to the user.

According to an embodiment, by providing as a current browser window the browser window most recently provided among at least one browser window associated with the first web application, continuity/convenience of work related to the first web application may be ensured for the user.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Meanwhile, although specific embodiments of the present disclosure have been described above, various changes may be made thereto without departing from the scope of the present disclosure. Thus, the scope of the present invention should not be limited to the above-described embodiments, and should rather be defined by the following claims and equivalents thereof.

## Claims

1. An electronic device, comprising:
a memory storing at least one instruction;
a communication unit; and
at least one processor connected to the memory and the communication unit and executing the at least one instruction stored in the memory, wherein the at least one processor is configured to:
based on an execution request of a first web application, generate a first tab group corresponding to the first web application in a web application browser and display a first service screen of the first web application corresponding to a first tab of the first tab group;
based on receiving a service request of the first web application via the first service screen, display a second service screen of the first web application corresponding to a second tab of the first tab group; and
based on identifying an execution request of a second web application in a state in which the first tab group is generated in the web application browser, generate a second tab group corresponding to the second web application in the web application browser and display a first service screen of the second web application corresponding to a first tab of the second tab group, and
wherein the web application browser is configured to display the first tab and the second tab of the first tab group and the first tab of the second tab group, and to display a service screen corresponding to a tab selected based on a user input.

2. The electronic device of claim 1, wherein the first web application is a software as a service (SaaS) application, and the second web application is a SaaS application or a desktop as a service (DaaS) application.

3. The electronic device of claim 1 or 2, wherein the at least one processor is further configured to:
display the first service screen of the first web application via a first browser window of the web application browser;
display the second service screen of the first web application via a second browser window of the web application browser; and
display the first service screen of the second web application via a third browser window of the web application browser.

4. The electronic device of any one of claims 1 to 3, wherein the second tab of the first web application is displayed to the right of the first tab of the first web application within a tab display area of the web browser, and the first tab of the second web application is displayed to the left of the first tab of the first web application or to the right of the second tab of the first web application within the tab display area of the web browser.

5. The electronic device of any one of claims 1 to 3, wherein the second tab of the first web application is displayed to the right of the first tab of the first web application within the first group tab corresponding to the first tab group within a tab display area of the web browser, and the first tab of the second web application is displayed within a second group tab corresponding to the second tab group positioned to the left or right of the first group tab.

6. The electronic device of any one of claims 1 to 5, wherein the at least one processor is further configured to move a tab group to which a tab selected based on a user input belongs to a leftmost position within the tab display area of the web browser.

7. The electronic device of any one of claims 1 to 6, wherein the at least one processor is configured to:
display a first representative tab corresponding to the first tab group and a second representative tab corresponding to the second tab group within the tab display area of the web browser; and
in a case that either the first representative tab or the second representative tab is selected, display all tabs belonging to a tab group corresponding to the selected representative tab within the tab display area of the web browser.

8. The electronic device of any one of claims 1 to 7, wherein the at least one processor is further configured to display a first application selection user interface (UI) corresponding to the first web application and a second application selection UI corresponding to the second web application on a screen,
wherein the execution request of the first web application is based on a user input selecting the first application selection UI corresponding to the first web application, and the execution request of the second web application is based on a user input selecting the second application selection UI corresponding to the second web application, and
wherein the first application selection UI is associated with an access address of the first web application, and the second application selection UI is associated with an access address of the second web application.

9. The electronic device of claim 8, wherein the at least one processor is further configured to:
provide first status information indicating that the first web application is running through a task manager module in case that the first web application is executed; and
provide second status information indicating that the second web application is running through the task manager module in case that the second web application is executed, and
wherein the first status information is associated with the first application selection UI, and the second status information is associated with the first application selection UI.

10. The electronic device of claim 9, wherein the at least one processor is further configured to display, as a current browser window on the web application browser, a browser window that was most recently displayed on the web application browser among at least one browser window associated with the first web application in case that a user input selecting the first application selection UI is identified in a state in which the second application selection UI is selected.

11. The electronic device of claim 9, wherein the at least one processor is further configured to change at least one of a size or color of the first status information in case that a user input selecting the first application selection UI is identified in a state in which the second application selection UI is selected.

12. The electronic device of claim 9, wherein the at least one processor is further configured to:
provide at least one first shortcut key function dedicated to the first web application in case that the first application selection UI is selected; and
provide a second shortcut key function dedicated to the second web application in case that the second application selection UI is selected.

13. A method performed by an electronic device, the method comprising:
based on an execution request of a first web application, generating a first tab group corresponding to the first web application in a web application browser and displaying a first service screen of the first web application corresponding to a first tab of the first tab group;
based on receiving a service request of the first web application via the first service screen, displaying a second service screen of the first web application corresponding to a second tab of the first tab group; and
based on identifying an execution request of a second web application in a state in which the first tab group is generated in the web application browser, generating a second tab group corresponding to the second web application in the web application browser based on identifying an execution request of the second web application in a state in which the first tab group is generated in the web application browser, and displaying a first service screen of the second web application corresponding to a first tab of the second tab group,
wherein the web application browser is configured to display the first tab and the second tab of the first tab group and the first tab of the second tab group, and to display a service screen corresponding to a tab selected based on a user input.

14. The method of claim 13, wherein the first web application is a software as a service (SaaS) application, and the second web application is a SaaS application or a desktop as a service (DaaS) application.

15. The method of claim 13 or 14, further comprising:
displaying the first service screen of the first web application via a first browser window of the web application browser;
displaying the second service screen of the first web application via a second browser window of the web application browser; and
displaying the first service screen of the second web application via a third browser window of the web application browser.
